# EUROPÄISCHE PATENTSCHRIFT

(11) **EP 0 848 477 B1**
(45) Veröffentlichungstag und Bekanntmachung des Hinweises auf die Patenterteilung: **16.05.2001**
(21) Anmeldenummer: 97121237.8
(22) Anmeldetag: 03.12.1997
(51) Int. Cl.: H02K 5/24

(54) **Geräuschgedämmte Halterung eines Elektromotors und Verfahren zum Zusammenbau der Halterung**
Noise isolating holder for electrical motor and assembling method therefor
Support isolant du bruit pour moteur électrique et procédé d'assemblage de celui-ci

(30) Priorität: 16.12.1996 DE 19652328
(43) Veröffentlichungstag der Anmeldung: 17.06.1998
(73) Patentinhaber: SIEMENS AKTIENGESELLSCHAFT, 80333 München (DE)
(72) Erfinder: Hartmann, Uwe, Dipl. Ing. (FH), 97956 Wenkheim (DE)

(56) Entgegenhaltungen:
- EP-A- 0 642 206
- DE-U- 9 108 745
- FR-A- 2 740 625

## Beschreibung

Die Erfindung bezieht sich auf eine geräuschgedämmte Halterung eines Elektromotors gemäß Patentanspruch 1 bzw. auf ein Verfahren zum Zusammenbau der Halterung gemäß Patentanspruch 10; derartige Halterungen sind insbesondere für Ventilatoren in Kraftfahrzeug-Heizungsanlagen bzw. Kraftfahrzeug-Klimaanlagen vorgesehen, bei denen auf der Rotorwelle des Elektromotors zumindest ein Lüfterrad befestigt und der Elektromotor in ein lüfterseitiges Motorhalterungsteil eingebaut ist.

Zur Reduzierung des Betriebsgeräusches wird der Elektromotor mit dem Lüfterrad üblicherweise mittels elastischer Zwischenteile, insbesondere Gummielemente, geräuschdämmend in dem umgebenden Motorhalterungsteil aufgenommen. Die elastischen Zwischenteile müssen einerseits die Anforderung nach einer hinreichend festen Halterung des Elektromotors mit dem Lüfterrad in dem Motorhalterungsteil gewährleisten und andererseits Körperschallbrücken verhindern; diese beiden Forderungen sind in jeder Einbaulage von Elektromotor und Lüfterrad zu erfüllen.

Durch die DE 43 29 804 A1 bzw. die EP 0 642 206 A1 ist eine Halterung für einen Elektromotor mit einem Gebläserad mit mehreren über den Umfang eines Polrings des Elektromotors verteilt angeordneten Abstützelementen aus gummielastischem Material bekannt, wobei die Abstützelemente zwischen einem an dem Polring wenigstens in axialer Richtung fixiert anbringbaren Adapter und einem Motorhalter angeordnet sowie wenigstens in axialer Richtung formschlüssig mit dem Adapter und dem Motorhalter verbunden sind. Entweder wird zumindest der Adapter in den Motorhalter axial eingesteckt, wobei Addapterfinger mit aufgesetzten Abstützelementen radial nachgeben, und dann der Adapter auf den Polring aufgesteckt oder es werden zunächst der Adapter auf den Polring aufgesetzt, anschließend die Abstützelemente angebracht und dann der Motorhalter unter Verquetschung der Abstützelemente aufgeschoben.

Es ist Aufgabe vorliegender Erfindung, in fertigungs- und montagetechnisch aufwandsarmer Weise eine sichere Geräuschdämmung und gleichzeitig stabile mechanische Halterung zwischen einem Elektromotor einerseits und einem äußeren Motor-halterungsteil andererseits unabhängig von der jeweiligen Einbaulage des Elektromotors gewährleisten zu können.

Die Lösung dieser Aufgabe gelingt erfindungsgemäß durch die geräuschgedämmte Halterung gemäß Patentanspruch 1 bzw. das Verfahren zum Zusammenbau einer derartigen Halterung gemäß Patentanspruch 10; vorteilhafte Ausgestaltungen der geräuschgedämmten Halterung sind jeweils Gegenstand der Unteransprüche 2-9.

Bei der erfindungsgemäßen geräuschgedämmten Halterung ragen die mit den radial äußeren geräuschgedämmten Zwischenteilen versehenen Adapterteil-Aufnahmen des bereits mit dem Motor-halterungsteil vormontierten Adapterteils derart in dessen Aufnahmeraum für den Elektromotor, daß beim axialen Einstekken des Elektromotors in den Adapterteil die Adapterteil-Aufnahmen auch ohne Verquetschung des geräuschdämmenden Zwischenteils nach außen schwenkbar und in formschlüssige axiale Lagefixierungsverbindung mit dem Motorhalterungsteil gebracht werden können. Zweckmäßigerweise sind die geräuschdämmenden Zwischenteile radial außen auf freien Enden von radial schwenkbaren Zungen gehaltert, die mit ihren anderen Enden nach Art einer Biegefeder an das vorzugsweise aus Kunststoff hergestellte Adapterteil mitangespritzt sind. Zur einfachen formschlüssigen Verbindung zwischen dem geräuschdämmenden Zwischenteil einerseits und dem Motorhalterungsteil andererseits sind nach einer Ausgestaltung der Erfindung die geräuschdämmenden Zwischenteile im Sinne einer formschlüssigen Einsteckverbindung mit dem Motorhalterungsteil mit radial vorstehenden Halterungsstegen und die Motorhalterung mit korrespondierenden Einstecköffnungen versehen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in Explosions-Vormontage-Darstellung einerseits eine erste Vormontage-Baueinheit mit einem Elektromotor mit auf einem Ende der Rotorwelle aufgestecktem Lüfterrad und andererseits eine zweite Vormontage-Baueinheit aus einem Motorhalterungsteil mit darin über ein geräuschdämmendes Zwischenteil vormontiertem Adapterteil, in das der Elektromotor mit dem Lüfterrad bei der Endmontage axial einzustecken ist;
- FIG 2: den Endmontagezustand der gemäß FIG 1 getrennt dargestellten, axial zusammenzusteckenden Bauteileinheiten;
- FIG 3: in einem Halbschnitt den Adapterteil aus FIG 1;
- FIG 4: die Draufsicht auf die rechte Stirnseite des Adapterteils gemäß FIG 3;
- FIG 5: in einem Teilausschnitt eine radiale Draufsicht auf den Adapterteil gemäß FIG 4 im Bereich einer zur Aufnahme eines geräuschdämmenden Zwischenteils angespritzten schwenkbaren Zunge.

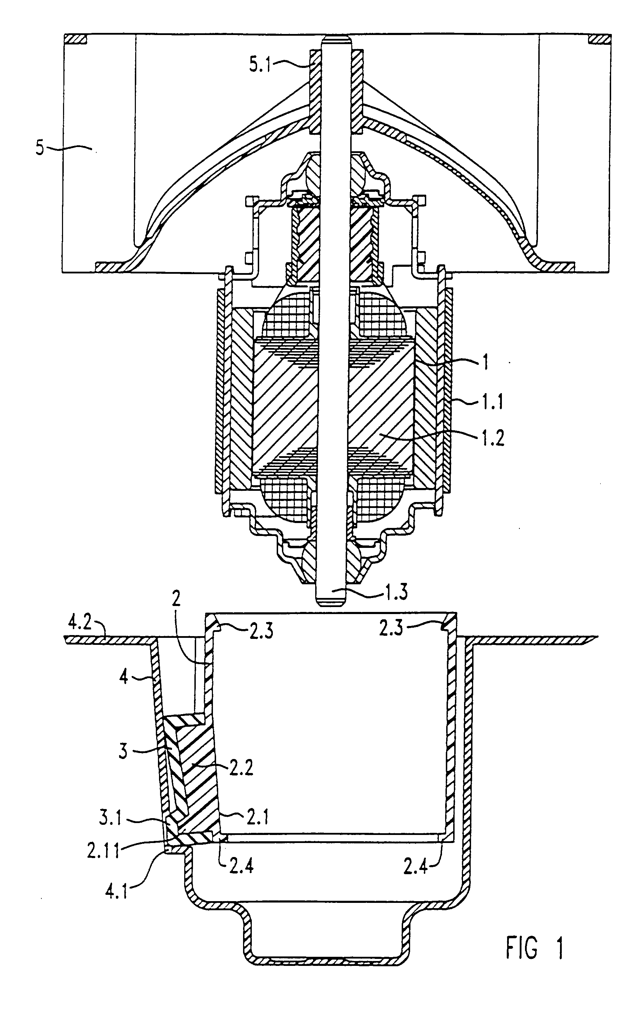

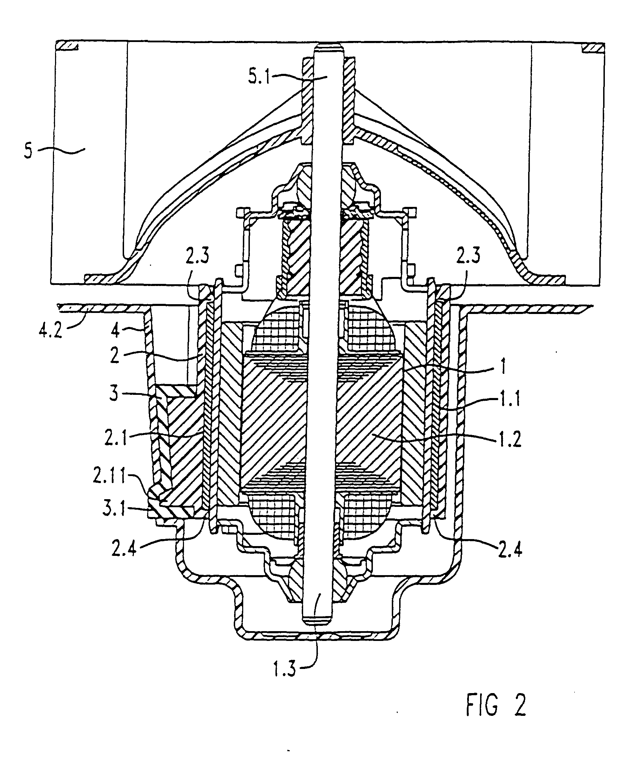

FIG 1 zeigt zwei Bauteileinheiten zur geräuschdämmenden Halterung eines Elektromotors 1 mit einem Lüfterrad 5 in einem Motorhalterungsteil 4 in jeweiligem Vormontagezustand, welche Bauteileinheiten nach ihrem axialen Zusammenstecken den Endmontagezustand gemäß FIG 2 ergeben. Die obere Bauteileinheit gemäß FIG 1 zeigt einen permanenterregten Kommutator-Elektromotor 1 mit einem Motorgehäuse 1.1 und einem mit einer Wicklung versehenen Rotorblechpaket 1.2, das auf einer Rotorwelle 1.3 befestigt ist. Auf dem oberen freien Wellenende der Rotorwelle 1.3 ist ein Radiallüfterrad 5 mit seiner Nabe 5.1 befestigt. Die gemäß FIG 1 untere Bauteileinheit zeigt ein topfförmiges Motorhalterungsteil 4 mit einem darin durch axiales Einstecken unter Zwischenlage eines geräuschdämmenden Zwischenteils 3 vormontierten Adapterteil 2.

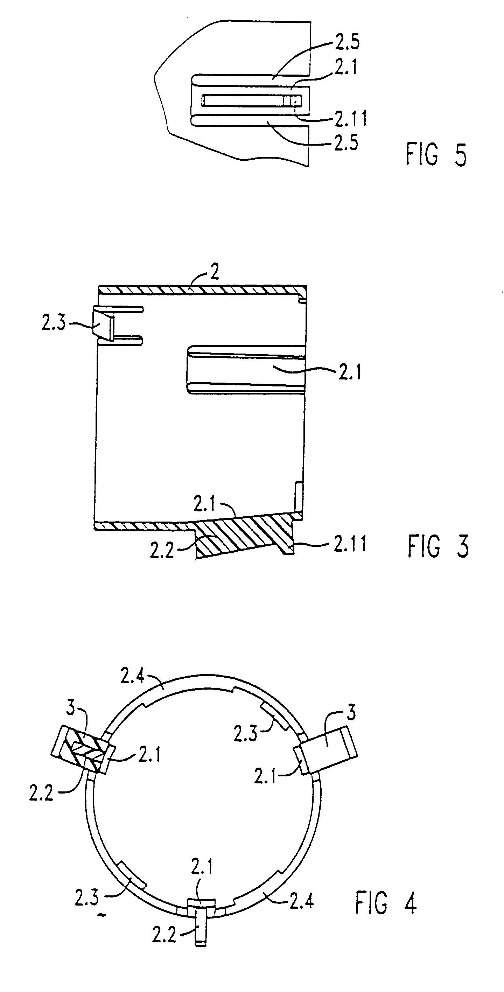

Wie insbesondere im Zusammenhang mit den Detail-Darstellungen gemäß FIG 3-5 ersichtlich, weist das Adapterteil 2 an seinem dem Einsteckende des Elektromotors 1 abgewandten Ende über den Umfang verteilt radial verschwenkbare Zungen 2.1 auf, die nach Art von radial mit ihren freien Enden verschwenkbare Biegefedern mit ihren anderen Enden einstückig an den vorzugsweise aus Kunststoff hergestellten Adapterteil 2 angespritzt und auf ihren Längsseiten durch Schlitze 2.5 gegenüber dem Adapterteil 2, insbesondere radial, beweglich sind.

Wie insbesondere aus FIG 4 ersichtlich, sind an die Zungen 2.1 radial vorstehende Halterungs-Stege 2.2, vorzugsweise einstückig, angeformt, auf die entsprechend geformte geräuschdämmende Zwischenteile 3 radial im Klemmschluß aufsteckbar sind.

Wie insbesondere aus dem Schnittbild der unteren Bauteileinheit gemäß FIG 1 ersichtlich, sind die Adapterteil-Zungen 2.1 relativ zu dem übrigen einsteckseitigen, vorzugsweise hülsenförmigen, Adpaterteil 2 nach radial innen abgewinkelt in das Einsteckprofil des Elektromotors 1 ragend angeordnet. Die geräuschdämmenden Zwischenteile 3 weisen, vorzugsweise im Bereich der freien Enden der Adapterteil-Zungen 2.1, radial vorstehende Fixierungsnasen 3.1 und im übrigen Bereich einen Rückenteil auf, derart daß mit leichtem Andruck des geräuschdämmenden Zwischenteils 3 der Adapterteil 2 im Sinne einer Vormontagefixierung in seiner axialen Betriebsendstellung relativ zum Motorhalterungsteil 4 positionierbar ist.

Beim Einstecken der in FIG 1 oberen Bauteileinheit in den Adapterteil 2 der unteren Bauteileinheit kommt das Motorgehäuse 1.1 des Elektromotors 1 gegen die in das Einsteckprofil ragenden Adapterteil-Zungen 2.1 zur Anlage und drückt bzw. verschwenkt diese beim weiteren Einstecken des Elektromotors 1 in den Adapterteil 2 nach radial außen, wobei die Fixierungsnasen 3.1 des geräuschdämmenden Zwischenteils 3 in korrespondierende Fixierungsöffnungen 4.1 des Motohalterungsteils 4 im Sinne einer sicheren axialen Lagefixierung zwischen Adapterteil 2 und Motorhalterungsteil 4 einklinken. Die erreichbare Tiefe des derartigen Formschlusses zwischen den - gegebenenfalls durch entsprechende Fixierungsvorsprünge 2.21 der Halterungsstege 2.2 unterstützte - Fixierungsnasen 3.1 einerseits und den Fixierungsöffnungen 4.1 des Motorhalterungsteils 4 andererseits hängt - wie z.B. im Fall von nicht radial schwenkbaren Zwischenteilen - in vorteilhafter Weise nicht von der maximal möglichen Zusammendrückbarkeit bzw. Quetschbarkeit des geräuschdämmenden Zwischenteils 3 bei dem vorherigen Einschub des Adapterteils 2 in das Motorhalterungsteil 4 ab, sondern kann im Sinne einer optimalen Fixierung der axialen Formschlüssigkeit für alle Einbaulagen ohne Notwendigkeit zusätzlicher Fixierungssicherungen durch den Einschwenkwinkel der Zungen 2.1 in den adapterseitigen Einsteckraum für den Elektromotor 1 bzw. die radiale Höhe der Halterungsstege 2.2 mit ihren geräuschdämmenen Zwischenteilen 3 festgelegt werden.

In der axialen gegenseitigen Betriebsendlage zwischen der oberen Bauteileinheit und der unteren Bauteileinheit gemäß FIG 1 stößt - wie insbesondere aus FIG 2 ersichtlich - die in Einsteckrichtung vordere Stirnseite des Motorgehäuses 1.1 gegen axiale Anlagekanten 2.4 des Adapterteils 2 an und ist das Adapterteil 2 gegenüber dem Motorgehäuse 1.1 in der anderen axialen Richtung durch Hinterschnappen von an das Adapterteil 2 angeformten Schnapphaken 2.3 gegenüber der anderen Stirnseite des Motorgehäuses 1.1 axial gesichert.

Der Elektromotor 1 ist also axial in ein Adapterteil 2 mit radial biegeelastischen Zungen 2.1 einsteckbar; auf die zunächst in das Einsteckprofil des Adapterteils 2 ragenden biegeelastischen Zungen 2.1 sind radial außen geräuschdämmende Zwischenteile 3 mit radial vorstehenden Fixierungsnasen 3.1 gehaltert, die beim Einstecken des Elektromotors 1 in das Adapterteil 2 im wesentlichen quetschfrei durch Anschlag des Elektromotors 1 gegen die Zungen 2.1 nach radial außen in korrespondierende Fixierungsöffnungen 4.1 eines mit dem Adapterteil 2 vormontierten Motohalterungsteils 4 im Sinne einer gegenseitigen axial geräuschgedämmten Lagefixierung eingreifen. Das derart bestückte Motorhalterungsteil 4 kann dann über ein z.B. flanschartiges Befestigungsteil 4.2 vom Gehäuse einer Lüfter- bzw. Klimaanlage, insbesondere in einem Kraftfahrzeug, aufgenommen werden.

Wie auch bereits aus der vorhergehenden Erläuterung der Figuren erkennbar, ist ein Verfahren zum Zusammenbau der erfindungsgemäßen geräuschdämmenden Halterung im wesentlichen durch folgende Verfahrensschritte gekennzeichnet:
- Radial verschwenkbares Haltern der geräuschdämmenden Zwischenteile (3) an dem Adapterteil (2), insbesondere durch Aufstecken auf radiale Halterungs-Stege (2.2) von radial beweglichen, vor dem Einstecken des Elektromotors (1) in dessen Einsteckprofil ragenden Adapterteil-Zungen (2.1);
- Vormontieren des Adapterteils (2) mit den daran gehaltenen geräuschdämmenden Zwischteilen (3) an dem Motorhalterungsteil (4) durch axiales Zusammenstecken in gegenseitige Betriebs-Endlage;
- Einstecken des Elektromotors (1) in das Adapterteil (2) bis in die gegenseitige Betriebsendlage und dabei radiales Bewegen der geräuschdämmenden Zwischenteile (3) mit ihren adapterseitigen Aufnahmen, insbesondere Adapterteil-Zungen (2.1), bis zur axialen formschlüssigen Lagefixierung relativ zu dem Motor-Halterungsteil (4).

## Patentansprüche

1. Geräuschgedämmte Halterung eines Elektromotors, insbesondere eines Elektromotors mit auf dessen Rotorwelle befestigtem Lüfterrad,
- mit durch axiales Zusammenstecken in einem radial äußeren Motorhalterungsteil (4) unter Zwischenlage eines geräuschdämmenden Zwischenteils (3) mittelbar gehaltenem Elektromotor (1);
- mit einem als unmittelbare Einsteckaufnahme für den Elektormotor (1) vorgesehenen, über das geräuschdämmende Zwischenteil (3) an dem Motorhalterungsteil (4) in gegenseitiger axialer Betriebsendlage vormontierten Adapterteil (2);
- mit einer Ausbildung des Adapterteils (2), derart daß durch das axiale Einstecken des Elektromotors (1) das geräuschdämmende Zwischenteil (3) mit seiner Adapterteil-Aufnahme im wesentlichen quetschfrei von einer radial inneren Lage in eine radial äußere Lage im Sinne einer gegenseitigen axialen Lagefixierung in formschlüssige Verbindung mit dem Motorhalterungsteil (4) bewegbar ist.

2. Geräuschgedämmte Halterung nach Anspruch 1
- mit an dem der Einsteckaufnahme des Elektromotors (1) abgewandten Ende des Adapterteils (2) vorgesehenen Aufnahme des geräuschdämmenden Zwischenteils (3).

3. Geräuschgedämmte Halterung nach Anspruch 2
- mit einer jeweiligen Aufnahme eines geräuschdämmenden Zwischenteils (3) auf radial schwenkbaren Zungen (2.1) des Adapterteils (2).

4. Geräuschgedämmte Halterung nach Anspruch 3
- mit einem hülsenförmigen Adapterteil (2), insbesondere Kunststoff-Adapterteil, mit an dessen der Einsteckaufnahme des Elektromotors (1) abgewandtem Ende über den Umfang verteilten, nach Art einer Biegefeder angebrachten, insbesondere angespritzten, axial verlaufenden und mit axial freien Enden radial bewegbaren Zungen (2.1).

5. Geräuschgedämmte Halterung nach Anspruch 4
- mit einer Aufnahme der geräuschdämmenden Zwischenteile (3) radial außen auf den freien Enden der Zungen (2.1).

6. Geräuschgedämmte Halterung nach Anspruch 5
- mit auf radiale, insbesondere einstückig angeformte, Halterungs-Stege (2.11) der Zungen (2.1) aufgesteckten geräuschdämmenden Zwischenteilen (3), insbesondere Gummi-Zwischenteilen.

7. Geräuschgedämmte Halterung nach zumindest einem der Ansprüche 1-6
- mit einer derartigen Vormontage des mit den geräuschdämmenden Zwischenteilen (3) versehenen Adapterteils (2) in der Motorhalterung (4), daß die Zwischenteil-Aufnahmen des Adapterteils (2) in dessen Einsteckprofil für den Elektromotor (1) ragen und durch diesen beim Einstecken in das Adapterteil (2) in ihre formschlüssige Positionsfixierungslage nach radial außen bewegbar, insbesondere verschwenkbar, sind.

8. Geräuschgedämmte Halterung nach zumindest einem der Ansprüche 1-7
- mit radial vorstehenen Fixierungsnasen (3.1) an dem geräuschdämmenden Zwischenteil (3);
- mit zu den Fixierungsnasen (3.1) korrespondierenden Fixierungsöffnungen (4.1) in dem Motorhalterungsteil (4), in welche die Fixierungsnasen ((3.1) beim Einstecken des Elektromotors (1) in das Adapterteil (2) im Sinne der axialen Lagefixierung eingreifen.

9. Geräuschdämmende Halterung nach zumindest einem der vorhergehenden Ansprüche 1-8
- mit einer axialen Lagefixierung des Adapterteils (2) relativ zu dem Elektromotor (1) in dessen Einsteckendlage in dem Adapterteil (2).

10. Verfahren zum Zusammenbau einer geräuschgedämmten Halterung eines Elektromotors nach zumindest einem der vorhergehenden Ansprüch mit folgenden Merkmalen:
- Radial verschwenkbares Haltern der geräuschdämmenden Zwischenteile (3) an dem Adapterteil (2), insbesondere durch Aufstecken auf radiale Halterungs-Stege (2.2) von radial beweglichen, vor dem Einstecken des Elektromotors (1) in dessen Einsteckprofil ragenden Adapterteil-Zungen (2.1);
- Vormontieren des Adapterteils (2) mit den daran gehaltenen geräuschdämmenden Zwischteilen (3) an dem Motorhalterungsteil (4) durch Zusammenstecken in gegenseitiger BetriebsEndlage;
- Einstecken des Elektromotors (1) in das Adapterteil (2) bis in die gegenseitige Betriebsendlage und dabei radiales Bewegen der geräuschdämmenden Zwischenteile (3) mit ihren adapterseitigen Aufnahmen, insbesondere Adapterteil-Zungen (2.1), bis zur axialen formschlüssigen Lagefixierung relativ zu dem Motor-Halterungsteil (4).

## Claims

1. Noise-insulated securing means for an electric motor, in particular an electric motor with an impeller fastened on its rotor shaft,
- with the electric motor (1) being retained indirectly, with the interposition of a noise--insulating intermediate part (3), in a radially outer motor-securing part (4) by an axial plugging-together operation;
- with an adapter part (2) which is provided as a direct plug-in mount for the electric motor (1) and is pre-assembled, via the noise-insulating intermediate part (3), on the motor-securing part (4) in the axial operational end position in relation to the same;
- with a design of the adapter part (2) such that, by virtue of the electric motor (1) being plugged in axially, the noise-insulating intermediate part (3), with its adapter-part mount, can be moved in an essentially compression-free manner, from a radially inner position into a radially outer position, into form-fitting connection with the motor-securing part (4), with the effect of the two being fixed axially in position in relation to one another.

2. Noise-insulated securing means according to Claim 1
- with the mount of the noise-insulating intermediate part (3) being provided at that end of the adapter part (2) which is directed away from the plug-in mount of the electric motor (1).

3. Noise-insulated securing means according to Claim 2
- with a respective mount of a noise-insulating intermediate part (3) on radially pivotable tongues (2.1) of the adapter part (2).

4. Noise-insulated securing means according to Claim 3
- with a sleeve-like adapter part (2), in particular plastic adapter part, with axially running tongues (2.1) which are distributed over the circumference at that end of the adapter part which is directed away from the plug-in mount of the electric motor (1), are fitted, in particular injection-molded on, in the manner of a spiral spring, and can be moved radially by way of axially free ends.

5. Noise-insulated securing means according to Claim 4
- with a mount of the noise-insulating intermediate parts (3) radially outside on the free ends of the tongues (2.1).

6. Noise-insulated securing means according to Claim 5
- with noise-insulating intermediate parts (3), in particular rubber intermediate parts, which are plugged onto radial, in particular integral, securing webs (2.11) of the tongues (2.1).

7. Noise-insulated securing means according to at least one of Claims 1-6
- with the adapter part (2), provided with the noise-insulating intermediate parts (3), being pre-assembled in the motor-securing means (4) such that the intermediate-part mounts of the adapter part (2) project into the plug-in profile of the latter for the electric motor (1) and can be moved, in particular pivoted, radially outwards into their form-fitting fixed position by said electric motor when the latter is plugged into the adapter part (2).

8. Noise-insulated securing means according to at least one of Claims 1-7
- with radially projecting fixing noses (3.1) on the noise-insulating intermediate part (3);
- with fixing openings (4.1) which correspond to the fixing nose (3.1), are provided in the motor-securing part (4) and in which the fixing noses (3.1) engage, with the effect of fixing the axial position, when the electric motor (1) is plugged into the adapter part (2).

9. Noise-insulated securing means according to at least one of the preceding Claims 1-8
- with axial position fixing of the adapter part (2) relative to the electric motor (1) in the plug-in end position of the latter in the adapter part (2) .

10. Method of assembling a noise-insulated securing means for an electric motor according to at least one of the preceding claims, having the following features:
- securing the noise-insulating intermediate parts (3) in a radially pivotable manner on the adapter part (2), in particular by plugging onto radial securing webs (2.2) of radially movable adapter-part tongues (2.1), which project into the plug-in profile of the electric motor (1) before the latter is plugged in;
- pre-assembling the adapter part (2), with the noise-insulating intermediate parts (3) retained thereon, on the motor-securing part (4) by plugging together in the operational end positions in relation to one another;
- plugging the electric motor (1) into the adapter part (2) into the operational end position in relation to the same and, in the process, moving the noise-insulating intermediate parts (3) with their adapter-side mounts, in particular adapter-part tongues (2.1), radially until they are fixed axially in position with a form fit relative to the motor-securing part (4).

## Revendications

1. Système de support insonorisant pour un moteur électrique, notamment un moteur électrique comprenant une roue de ventilateur fixée sur son arbre de rotor,
- pour lequel le moteur électrique (1) est supporté indirectement par emmanchement axial dans une pièce de support de moteur (4) radialement extérieure, avec interposition d'une pièce intercalaire (3) d'insonorisation;
- le système comportant également une pièce d'adaptation (2) prévue en tant que logement d'emmanchement direct pour le moteur électrique (1), et montée préalablement sur la pièce de support de moteur (4), par l'intermédiaire de la pièce intercalaire (3) d'insonorisation, dans une position axiale finale réciproque de fonctionnement;
- la pièce d'adaptation (2) étant d'une configuration telle que par l'emmanchement axial du moteur électrique (1), la pièce intercalaire (3) d'insonorisation puisse être déplacée avec le support récepteur correspondant de la pièce d'adaptation, sensiblement sans écrasement, d'une position radialement intérieure dans une position radialement extérieure en réalisant ainsi une fixation de position axiale réciproque par assemblage par complémentarité de forme avec la pièce de support de moteur (4).

2. Système de support insonorisant selon la revendication 1,
- comprenant un support récepteur pour la pièce intercalaire (3) d'insonorisation, prévu à l'extrémité de la pièce d'adaptation (2), opposée à l'entrée du logement d'emmanchement du moteur électrique
(1).

3. Système de support insonorisant selon la revendication 2,
- comprenant un support récepteur respectif pour une pièce intercalaire (3) d'insonorisation sur chacune de languettes (2.1) radialement pivotantes de la pièce d'adaptation (2).

4. Système de support insonorisant selon la revendication 3,
- comprenant une pièce d'adaptation (2) en forme de manchon, notamment une pièce d'adaptation en matière plastique, comportant à son extrémité opposée à celle de l'entrée du logement d'emmanchement du moteur électrique (1), des languettes (2.1) réparties sur la périphérie, qui sont réalisées à la manière d'un ressort de flexion, sont formées notamment par moulage par injection, s'étendent axialement, et sont mobiles radialement au niveau d'extrémités axiales libres.

5. Système de support insonorisant selon la revendication 4,
- comprenant un support récepteur des pièces intercalaires (3) d'insonorisation, radialement à l'extérieur sur les extrémités libres des languettes (2.1).

6. Système de support insonorisant selon la revendication 5,
- comprenant des pièces intercalaires (3) d'insonorisation, notamment des pièces intercalaires en caoutchouc, engagées sur des nervures de support (2.2, 2.11) radiales des languettes (2.1), notamment formées d'un seul tenant avec ces dernières.

7. Système de support insonorisant selon l'une au moins des revendications 1 à 6,
- comprenant la réalisation d'un montage préalable dans la pièce de support de moteur (4), de la pièce d'adaptation (2) dotée des pièces intercalaires (3) d'insonorisation, de façon telle que les supports récepteurs des pièces intercalaires de la pièce d'adaptation (2) fassent saillie vers l'intérieur dans le profil d'emmanchement de cette dernière, destiné au moteur électrique (1), et peuvent être déplacés radialement vers l'extérieur par celui-ci, dans leur position de fixation par complémentarité de forme, notamment par pivotement, lors de l'emmanchement du moteur électrique dans la pièce d'adaptation (2).

8. Système de support insonorisant selon l'une au moins des revendications 1 à 7,
- comprenant des talons de fixation (3.1) faisant saillie radialement, sur la pièce intercalaire (3) d'insonorisation;
- ainsi que des ouvertures de fixation (4.1) dans la pièce de support de moteur (4), qui correspondent aux talons de fixation (3.1), et dans lesquelles viennent s'engager les talons de fixation (3.1) lors de l'emmanchement du moteur électrique (1) dans la pièce d'adaptation (2), en réalisant la fixation en position axiale.

9. Système de support insonorisant selon l'une au moins des revendications précédentes 1 à 8,
- présentant une fixation en position axiale de la pièce d'adaptation (2) par rapport au moteur électrique (1 ) dans sa position finale d'emmanchement dans la pièce d'adaptation (2).

10. Procédé d'assemblage d'un système de support insonorisant d'un moteur électrique, selon l'une au moins des revendications précédentes, présentant les caractéristiques suivantes:
- maintien radialement pivotant des pièces intercalaires (3) d'insonorisation, sur la pièce d'adaptation (2), notamment par engagement sur des nervures de support (2.2) radiales de languettes (2.1) de la pièce d'adaptation, mobiles radialement et faisant saillie dans le profil d'emmanchement du moteur électrique, avant l'emmanchement de celui-ci;
- montage préalable sur la pièce de support de moteur (4) de la pièce d'adaptation (2) supportant les pièces intercalaires (3) d'insonorisation, par emmanchement en position finale réciproque de fonctionnement;
- emmanchement du moteur électrique (1) dans la pièce d'adaptation (2), jusqu'à la position finale réciproque de fonctionnement, en produisant ainsi un mouvement radial des pièces intercalaires (3) d'insonorisation avec leurs supports récepteurs de la pièce d'adaptation, notamment les languettes (2.1) de la pièce d'adaptation, jusqu'à la fixation en position axiale par complémentarité de forme, par rapport à la pièce de support de moteur (4).
